# EUROPEAN PATENT SPECIFICATION

(11) **EP 2 602 306 B1**
(45) Date of publication and mention of the grant of the patent: **12.11.2014**
(21) Application number: 11192566.5
(22) Date of filing: 08.12.2011
(51) Int. Cl.: C10L 1/18, C11B 3/00, C11B 13/00, C11C 1/08, C10L 1/188

(54) **Process for obtaining a diesel like fuel**
Verfahren zum Erhalt eines dieselartigen Kraftstoffs
Procédé permettant d'obtenir un carburant de type diesel

(43) Date of publication of application: 12.06.2013
(73) Proprietor: Invico Tech AB, 273 50 Brösarp (SE)
(72) Inventor: Warnqvist, Jan, 610 25 Vikbolandet (SE)
(74) Representative: Ström & Gulliksson AB

(56) References cited:
- WO-A1-2009/029344
- US-A- 2 354 812
- US-A- 2 388 412
- US-A- 3 177 196
- US-A- 4 534 900
- KESKIN A ET AL: "Usage of methyl ester of tall oil fatty acids and resinic acids as alternative diesel fuel", ENERGY CONVERSION AND MANAGEMENT, ELSEVIER SCIENCE PUBLISHERS, OXFORD, GB, vol. 51, no. 12, 1 December 2010 (2010-12-01), pages 2863-2868, XP027180946, ISSN: 0196-8904 [retrieved on 2010-07-07]

## Description

### Field of the invention

The invention relates to a method for obtaining an enriched material for obtaining a diesel like fuel or a diesel like fuel additive from crude tall oil and to such an enriched material. Further, the invention relates a diesel like fuel or a diesel like fuel additive and to method for obtaining such from crude tall oil.

### Summary

Due to the green-house effect and the fact the oil wells of the world eventually will run out, there is an interest in alternative renewable fuels throughout the world. As example bio-ethanol has been introduced as alternative to gasoline or as addition in gasoline to reduce or eliminate the contribution to the green-house effect.

Similarly, biodiesel, referring to a vegetable oil- or animal fat-based diesel fuel consisting of long-chain alkyl (methyl, propyl or ethyl) esters of fatty acids, has found use as an alternative or addition to petroleum diesel. Typically, biodiesel is made by transesterfication of triglycerides, originating from a vegetable oil or animal fat feedstock, with an alcohol, such as methanol, giving fatty acid methyl esters (FAME:s) and glycerol. Although sodium and potassium methoxide commonly is used to produce alkyl esters of triglycerides, as methanol is the cheapest alcohol available, ethanol, as well as higher alcohols such as isopropanol and butanol, can be used to produce alkyl esters.

For every metric ton of biodiesel produced, approximately 100 kg of glycerol is obtained as by-product. Although there has been a market for the glycerol obtained, which assisted the economics of the process as a whole, the increase in global biodiesel production, has resulted in crash for the market price for crude aqueous glycerol. Nowadays, the production of glycerol thereby lowers the overall process economics.

A variety of plant and animal oils may be used to produce biodiesel. As common examples may be mentioned rapeseed and soybean oils, animal fats including tallow, lard, yellow grease, chicken fat, as wells as by-products of the production of Omega-3 fatty acids, and oil from halophytes, such as *Salicornia bigelovii.*

However, current worldwide production of vegetable oil and animal fat is not sufficient to replace liquid fossil fuel use. Furthermore, some object to the vast amount of farming and the resulting fertilization, pesticide use, and land use conversion that would be needed to produce the additional vegetable oil. There is thus a need for alternative sources for the production of raw materials suitable for further refinement to diesel engine fuel and fuel additives.

After the transesterfication, biodiesel, unlike straight vegetable oil, has combustion properties similar to those of petroleum diesel. Thus, biodiesel may replace petroleum diesel in most current uses. Similar to ethanol used to replace gasoline, the heat value (37.27 MJ/kg) of biodiesel is about 9% lower than the heat value of petroleum diesel. Thus, biodiesel give rise to a lower fuel economy compared to petroleum diesel.

There are alternatives to transesterfication of tri-glycerides within the art for the production of diesel like fuels from renewable plant based feedstocks. As an example, WO 2009/011639 discloses a process for manufacturing renewable diesel fuels from carboxylic acid rich organic material originating in plants, by treatment of said carboxylic acid rich material in at least three process stages; a) a distillation step under vacuum b) a decarboxylation step in the presence of an heterogeneous decarboxylation catalyst; c) a separation step wherein carbon dioxide is separated from the renewable diesel formed in step b). However, the distillation steps as well as the decarboxylation step are energy consuming. Furthermore, using temperatures exceeding 100°C, will initiate formation of (poly)aromatic hydrocarbons and polymerization.

Furthermore, WO 2009/131510 discloses a method for conversion of crude tall oil into diesel fuels. The disclosed method comprises the steps of: (a) removal of non-oil contaminants, including calcium, present in the crude tall oil thereby forming a refined tall oil stream; (b) removal of the volatile fraction of the refined tall oil stream; (c) separation of the volatiles free oil stream into two process streams, wherein the first process stream comprises components with boiling points, at atmospheric pressure, in the range of 170-400 degrees C; and (d) lowering the oxygen content in the stream comprised of components with boiling points in the range 200 - 400 degrees C. WO 2009/131510 suffers from similar disadvantages as WO 2009/011639.

Although, fatty acids and rosin acids being present in crude tall oil may be separated from each other by the means of distillation, the fatty acids as well as the rosins acid will co-distill with neutral no-acidic components having similar boiling points. EP 1 568 760 discloses a process for refining crude tall oil overcoming said problem. In the disclosed process crude tall oil is saponified to form saponified crude tall oil comprising unsaponifiable matter, sodium or potassium soaps of fatty acids and rosin acids and water. The saponified crude tall oil is mixed with a liquid hydrocarbon. Subsequently, the formed hydrocarbon phase comprising unsaponifiable matter and being substantially free of water is separated from the formed aqueous phase comprising fatty acids and rosin acids substantially free of the hydrocarbons. By such a procedure the neutral no-acidic components, such as fatty alcohols, various hydrocarbon derivatives, such as squalene, docosanol, tetracosanol, sitosterol and sitostanol, being present in crude tall oil may be separated form the fatty acids and rosin acids. Subsequently to the separation of neutral no-acidic components, the fatty acids and rosin acids may be separated into one water free fraction comprising the fatty acids and one water free fraction comprising rosin acids.

Thus, there is need within the art for a process for obtaining an enriched material for obtaining a diesel like fuel or a diesel like fuel additive from renewable source.

### Summary

Consequently, the present invention seeks to mitigate, alleviate, eliminate or circumvent one or more of the above-identified deficiencies in the art and disadvantages singly or in any combination by providing an enrichment method for obtaining components for the production of a diesel like fuel additive from crude tall oil. In such a method, lipophilic components present in crude tall oil are extracted with an organic solvent. Subsequently, the obtained organic extract, comprising lipophilic components, are washed with sulfuric acid. Thereafter, the acid washed organic extract is washed with water to obtain tall oil enriched in components for obtaining a diesel like fuel additive.

A further aspect of the invention relates to a method for obtaining a diesel like fuel additive from crude tall oil. In such a method, the hereinabove mentioned tall oil enriched in components for obtaining a diesel like fuel additive is esterified with a C1-3 alkanol, whereby a diesel like fuel additive may be obtained.

An even further aspect of the invention relates to a diesel like fuel additive obtainable by such a method.

Further advantageous features of the invention are defined in the dependent claims. In addition, advantageous features of the invention are elaborated in embodiments disclosed herein.

### Detailed description of preferred embodiments

Crude tall oil (CTO) is obtained through acidification of black liquor soaps, being by-products of Kraft pulping of wood for obtaining cellulose. Kraft pulping consists of the digestion of wood chips at high temperature and pressure in diluted alkaline liquor containing sodium hydroxide and sodium sulfide as active ingredients. The digestion disrupts the cellular structure and causes the dissolution of lignin, other chemical products contained in the wood and hemicellulose. Thus, the cellulose fiber dispersed in the spent liquor from the digestion may be isolated by filtration. The reaming liquor, known as black liquor, is further evaporated and calcinated for the recovery of salts and alkalis, which return to the Kraft pulping process. After several stages of evaporation, the concentration of solids is around 30% and a portion of the solids, known as black liquor soaps, becomes insoluble and the insoluble portion is separated by skimming. The obtained skimmed pasty matter does typically have a water content between 30 and 50%.

Typically, black liquor soaps are transformed into crude tall oil by reacting the black liquor soaps with sulfuric acid, whereby fatty and rosin acid soaps are acidified and into their corresponding free acids (fatty and rosin acids). Upon addition of sulfuric acid the black liquor soaps are generally separated in three phases. The upper layer is denoted crude tall oil (CTO), and its main components are fatty and rosin acids, the major ones being diterpenic acids, such as abietic acid, dehydroabietic acid, and pimaric acid, unsaponifiable matter, including fatty alcohols, various hydrocarbon derivatives, such as squalene, and some suspended solids and water. The second layer or middle layer contains most of the lignin and insoluble solids originally present in black liquor soaps. The lower layer or brine is fundamentally composed of water and sodium sulfate and the sulfate is typically recovered. Crude tall oil typically consists of from 40 to 60 wt.% organic acids, including fatty and rosin acids, and 40-60wt.% neutral substances. The crude tall oil typically also comprises sulphur, calcium, and sodium at 50 to1100 ppm levels (weight).

While most of the various organic compounds being present in CTO in principle may find use as a feedstock for the production of fuels, CTO also comprises some organic compounds less suitable for the production of fuels. These organic compounds include aromatic compounds. Further, CTO also comprises various inorganic impurities, such as inorganic salts, like those from sodium, calcium. In order to avoid excessive wear of the engine, the content of sodium, calcium, potassium, and magnesium, as wells as phosphourous compounds, in organic extracts for fuel applications, should be as low as possible.

As stated above, the properties of FAME differ from ones of petroleum diesel. Thus, FAME mainly has found use as an additive to petroleum diesel and for use in certain adapted engines. Further, fatty acids, being of the starting materials for the production of FAME, constitute up to 50% of the total content of organic combustible compounds in CTO.

The present inventors have surprisingly found that a diesel like, renewable fuel additive may be obtained from crude tall oil in high yields, by enriching the crude tall oil for fatty acids, as well as certain diesel like components, including middle range boiling diterpene like compounds, many of them unknown in the literature, and subsequent esterfication of the enriched tall oil. The esterified enriched tall oil has calculated net heat value close to the one of petroleum diesel and significantly higher than one of FAME

Furthermore, the enriched tall oil is produced consuming less energy than FAME from CTO, similar to FAME from traditional sources e.g. rape seed, sunflower and soy bean oils. It is suitable for local production and consumption e.g. in connection to pulp and paper milling, minimizing the carbon footprint compared to most biofuels through shorter transportation routes and less energy consuming processing.

Thus an embodiment relates to an enrichment method for obtaining components for the production of a diesel like fuel or a diesel like fuel additive from crude tall oil.

In such a method, crude tall oil is provided. Typically, the crude tall oil is obtained through acidification of black liquor soaps, being by-products of Kraft pulping of wood for obtaining cellulose. In the enrichment method, lipophilic components present in the crude tall oil are extracted with organic solvent, thereby inorganic contaminations and hydrophilic organic contaminations are removed. Further, fatty acids, as well as certain diesel like components, including middle range boiling diterpene like compounds, are enriched.

The organic solvent used for the extraction is typically an organic solvent non-miscible with water, in order to allow for efficient extraction of lipophilic components. Further, the organic solvent preferably has a boiling point of less than 120°C, such as less than 100°C, at atmospheric pressure. As the enriched material, due to the relative high iodine number, is heat sensitive, high temperatures should preferably be avoided in order to minimize polymerization. Accordingly, solvents that may be removed under vacuum without applying high temperatures are preferred. Preferred examples of organic solvents are C5-C10 linear, branched or cyclic hydrocarbons. Specific examples of preferred organic solvents include n-hexane, cyclohexane, and n-heptane.

In extracting lipophilic components present in the crude tall oil, the crude tall oil and the organic solvent may be mixed in a weight ratio (crude tall oil:organic solvent) of 2:1 to 1:5, such as 1:1 to 1:2. Further, the crude tall oil may be extracted more than one time, such as 2 or 3 times. Use of more than one extraction is deemed to be more efficient than increasing the amount of organic solvent used in a single extraction. If extracted repeatedly, weight ratios of 2:1 to 1:5, such as 1:1 to 1:2, or 1:1, of crude tall oil: organic solvent may be used in each extraction step.

In order to facilitate phase separation, water as well as organic solvent may be added to the crude tall oil in extracting lipophilic components present in the crude tall oil. The weight ratio (crude tall oil:water) may be 1:1 to 10:1, such as 2:1 to 7:1, such 3:1 to 5:1.

Furthermore, the process time could be shortened by applying centrifugal separation. However, also gravimetric separation could be used.

Subsequent to the extraction, the organic extract, or the combined organic extracts, is to be washed with sulfuric acid. The wash with sulfuric acid will cause precipitation and/or separation of some components from the organic extract. Further, the wash with sulfuric acid may cause sulfonation of certain components, such as aromatic components. In order to minimize the reaction of unsaturated fatty acids and rosin acids, being present in the organic extract, with the sulfuric acid, it preferred to cool the organic extract prior to the wash with sulfuric acid. Thus, the organic extract may be cooled to between 0°C and 10°C, such as to between 2°C and 5°C. The organic extract may even be cooled to temperatures below 0°C. However, it is preferred to not cool the organic extract to a temperature below the melting point of the sulfuric acid.

Furthermore, it was noticed that cooling of the organic extract caused precipitation of some components. It is believed that these components may include high-boiling neutral substances. As removal of such components is believed to improve the cold properties of the final fuel additive, the cooled organic extract is, according to an embodiment, filtered prior to being washed with sulfuric acid.

In the wash of the organic extract, sulfuric acid comprising at least 90 wt% H₂SO₄, such as at least 95 wt.% H₂SO₄, may preferably be used in order to obtain efficient washing. Typically, concentrated sulfuric acid is used. Upon washing the organic extract, 2 to 20 wt.%, such as 5 to 15 wt.% sulfuric acid , may be added to the organic extract. Subsequent to adding sulfuric acid, the phases are mixed thoroughly; thereafter the washed organic extract is separated.

Subsequent, to the acid wash, the acid washed organic extract may be washed with water, thereby removing any H₂SO₄ remaining in the organic extract. The wash with water may typically be repeated until the pH of the wash water is 3 or above. Preferably, the wash with water is repeated until the pH the wash water is between 3.5 and 4.5.

Subsequent, to the acid wash, the washed organic extract may be cooled. Similar to what has been described above, cooling of the washed organic extract may cause precipitation of some components. As removal of such components is believed to improve the cold properties of the final fuel additive, the cooled organic extract may, according to an embodiment, be filtered and/or centrifuged to remove precipitated components. The washed organic extract may be cooled to a temperature of 10°C or below, such as a temperature of 5°C or below. While the washed organic extract may be cooled to a temperature between 10°C and 0°C, such as to between 2°C and 5°C according to an embodiment, the organic extract may be even be cooled to temperatures below 0°C, according to an alternative embodiment. By cooling the organic extract to temperatures below 0°C, also water being present in the washed organic extract may be crystallized and precipitated.

Subsequently, the washed organic extract may be evaporated under reduced pressure, thereby lowering, or even eliminating, the content of organic solvent and/or water in the organic extract. As water may lower the yield in the subsequent esterification, water being a side product in the esterfication, it is advantageous to reduce the water content of the organic content as much as possible, such as below 800 ppm. The water content may also, as known to skilled person, be reduced by applying drying agents, such as molecular sieves. Further, although the organic solvent in principle could form part of the fuel additive, the solvent may also be evaporated to allow for recycling of it. The evaporated solvent may be re-used directly, or it may be purified, such as by distillation, before being reused.

As the organic extract has a relative high iodine number, it is heat sensitive. Thus, high temperatures should preferably be avoided in handling the organic extract. Further, use of high temperatures is energy consuming, thus affecting the overall economy of the process. According to an embodiment, the method may be designed in such a way that the temperature of the crude tall oil, and extracts thereof, does not exceed 80°C in any step of the method.

By avoiding high temperatures in the method, formation of high boiling adducts, such as polymeric and polyaromatic adducts, may be avoided. Thus, the need to distill the product, in order to reduce or eliminate the content of such adducts, before being used as a diesel like fuel or a diesel like fuel additive, may be dispensed with. In contrast to such polymeric and polyaromatic adducts, there is no need to separate high-boiling components present in the crude tall oil, from the organic extract.

In order to reduce the acid number of the washed organic extract, i.e. tall oil enriched in components for obtaining a diesel like fuel or a diesel like fuel additive, and to lower the boiling point of fatty acids therein, carboxylic acids, typically fatty acids, but also possibly rosin acids, of the washed organic extract may be esterified with a C1-3 alkanol, such as methanol. In addition to reduce the acid number of the washed organic extract and lower the boiling point of fatty acids therein, the esterification will reduce the viscosity of the washed organic extract.

The carboxylic acids may be esterified by adding a C1-3 alkanol and a catalyst to the washed organic extract. Preferably the carboxylic acids are esterified at elevated temperature, such as at temperature of 59 to 65°C. Thus, the organic extract may be heated prior to addition of the C1-3 alkanol. Preferably, the catalyst is selected among strong acids, which may removed by conventional methods, such as filtration, distillation, or extraction, subsequent to the esterfication. As an example, the catalyst may be concentrated sulfuric acid. Further, the catalyst may be a sulfonic acid resin.

Subsequent to the addition of the C1-3 alkanol and the catalyst, the reaction mixture may be heated, such as to 59-65°C. The reaction mixture may be heated for sufficient time to establish equilibrium. As an example, the reaction mixture may be heated for 3-5 hours. As the esterfication is an equilibrium process, molar excess of the C1-3 alkanol may be used. Typically, C1-3 alkanol may be added in a weight ratio (washed organic extract: C1-3 alkanol ) of 1:1 to 1:5, such 1:1 to 1:2. The catalyst may be added to the C1-3 alkanol before being added to the washed organic extract. As an example, 0.5 to 5 wt%, such 1 to 2 wt%, e.g. about 1 wt.%, concentrated sulfuric acid may be added to the C1-3 alkanol before being added to the washed organic extract.

Subsequent to the esterification, the esterified organic extract may be washed with water, whereby any excess of methanol and the catalyst may be removed. Remaining methanol and water may be removed by evaporation under reduced pressure. Similar, to what have been described above, it is preferred if the method is designed to avoid heating the organic extract to temperatures above 80°C in any step.

By such a method that has been described, a diesel like fuel or a diesel like fuel additive, suitable for addition to petroleum diesel may be produced in high yields, such as in a yield of 50 to 75%, from crude tall oil. Further the need for energy consuming distillation steps, lowering the overall process economy, may de dispensed with.

The obtained fuel additive comprises a complex mixture of components enriched from crude tall oil, of which some have been esterified. An embodiment relates to fuel additive obtainable by such a method as described herein.

Such a fuel additive may have one or several of the following properties:
- a iodine number according to SS-EN 14111 of at least 170;
- comprise between 40 wt% and 60 wt% of components other than fatty acids, methyl esters of fatty acids, rosin acids and methyl esters of rosin acids ;
- an acid number according to SS-EN 14104 of not more than 100, such as not more than 80;
- a heat value of at least 39 MJ/kg, according to Boie (cf. Data och Diagram ; Mörstedt/Hellsten 1994 ISBN 01-634-0876-7); and
- a density in the range of 930 to 960 kg/ m³ at 15°C

Although, the washed organic extract may be esterified to obtain a diesel like fuel or a diesel like fuel additive, it may be used in other types of processes as well. As example, the washed organic extract is deemed to be useful as an alternative feedstock for decarboxylation in such a process as described in WO 2009/131510 or for reformation in a petroleum refinery. Furthermore, the organic extract is suited for further treatment (with hydrogen etc.) to obtain a product very similar to standardized petroleum diesel fuel, as it is of very high purity with very low levels of inorganic and organic impurities and as it has suitable boiling range.

One embodiment thus relates to use of the washed organic extract, or the esterified organic extract, as starting material for reformation in a petroleum refinery.

Without further elaboration, it is believed that one skilled in the art can, using the preceding description, utilize the present invention to its fullest extent. The preferred specific embodiments described herein are therefore to be construed as merely illustrative and not limitative of the remainder of the description in any way whatsoever. Further, although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc do not preclude a plurality.

### Experimental

The following examples are mere examples and should by no mean be interpreted to limit the scope of the invention. Rather, the invention is limited only by the accompanying claims.

### Crude tall oil

The crude tall oil was at collected from the pulp mill of Mörrum, Södra Cell. Samples of crude tall oil were also collected from the Värö and Mönsterås pulp mills, also Södra Cell. All oils were produced in similar manners, i.e. through the Kraft process.

### Extraction with organic solvent

The extraction steps were carried out with n-hexane and heptane, respectively. Three different weight ratios of organic solvent:CTO (1:1, 1.5:1, and 2:1) were used for the extraction. CTO was weighed into the separation funnel, whereafter the solvent was added to the CTO. Subsequently, the funnel was shaken vigorously for one minute. The funnel was then placed in an upright position allowing its content to separate for 2 hours. The upper, lipid, phase was then decanted from the lower non-lipid phase to obtain enriched tall oil.

### Wash with sulfuric acid

Subsequent to the extraction step, the enriched tall oil was washed with sulfuric acid. Before the addition of sulfuric acid, the enriched tall oil was cooled to 5°C. Upon cooling of the organic phase, high-boiling neutral substances did crystallize. Precipitated material were removed by filtration prior to the addition of sulfuric acid. Once filtered, concentrated sulfuric acid (>95 wt.% H₂SO₄) was added to the enriched tall oil and the resulting mixture was stirred by an electric stirrer. The temperature was kept at 5°C during the washing step. After stirring for 1 hour, the washed enriched tall oil was separated by decanting it from the acid phase and any precipitated matter to obtain an acid washed, enriched tall oil.

### Wash with water

The acid washed, enriched tall oil was transferred to a separation funnel, and washed with ordinary tap water in an oil:water ratio of 1:0.5 (w/w). The acid washed, enriched tall oil was repeatedly washed until the water phase had a pH exceeding 3.5 (typically 3 to 4 times), to obtain purified enriched tall oil.

### Crystallization

It had been observed that the content of solid substances, e.g. crystals of dehydroabietic acid, abietic acid, sitosterol and its esters etc, did influence the viscosity of the enriched oil. In order to lower the content of such compounds, and thereby lower the viscosity of the enriched oil, the extracted oil phases were cooled and filtered, as indicated above, prior to the wash with sulfuric acid.

Further, the purified enriched oil was also cooled, typically to 5°C, and filtered subsequent to the water wash step.

In order to facilitate the filtration, part of the formed crystals were collected by gravimetric separation prior to filtration.

### Evaporation

In order to allow for recycling of the organic solvent, as well lowering the water content of the purified enriched oil from the crystallisation step, the purified enriched oil was evaporated under reduced pressure (0,1 bar) at an elevated temperature not exceeding 80°C to provide evaporated purified enriched tall oil. The water content was typically reduced below 800 ppm in order to facilitate the subsequent esterification.

In Table 1, the yield using heptane as organic solvent are given after the various steps.

**Table 1**

| | Proportions solvent:CTO | | |
|---|---|---|---|
| | 1:1 | 1.5:1 | 2:1 |
| CTOg | 800 | 663.5 | 540 |
| Heptane g | 800 | 995.3 | 1080 |
| Yield of non-lipid phase after extraction g (% by mass) | 172 (10.8) | 185.8 (9.7) | 99 (6.1) |
| Yield of enriched tall oil after the extraction g (% by mass) | 1428 (89.2) | 1473 (88.8) | 1521 (93.9) |
| Yield of sedimented phase as a result of the acid wash g (% by mass) | 833 (52.1) | 210 (12.7) | 355 (21.9) |
| Yield of purified enriched tall oil after evaporation g (% by mass) | 364 (45.5) | 371 (56) | 350 (65) |

It was concluded that a weight ratio of 1.5:1 seemingly was the most efficient, as far as quality and yield were concerned, taken the time-and effort-consuming handling with solvent into account.

It was observed that the higher the proportion of solvent the higher the yield of purified enriched oil. Further, it was observed that the process time could be diminished by centrifugal instead of gravimetric separation.

In table 2 below, the yield of evaporated purified enriched tall oil, the water content in the evaporated purified enriched tall oil, and the acid value in the evaporated purified enriched tall oil, wherein heptane in a 1:1-weight ratio has been used in the extraction step, for various amounts of sulfuric acid in the acid wash step, are given

**Table 2**

| Amount of sulfuric acid (wt. %) | Yield of enriched tall oil (% by mass) | Water content in the enriched tall oil (ppm) | Yield of sediment in the acid wash (% by mass) | Mineral acid related acid value in the enriched tall oil (mg KOH/g) | Organic acid-related acid value in the enriched tall oil (mg KOH/g) |
|---|---|---|---|---|---|
| 0 | 0 | - | 0 | 1.1 | 128.8 |
| 2 | 101 | - | 0 | 5.7 | 109.5 |
| 3 | 103 | - | 7.2 | 3 | 134.3 |
| 4 | 83 | - | 15 | 3.6 | 121.2 |
| 6 | 61 | 3600 | 44.8 | 1.3 | 118.9 |
| 8 | 96 | 2000 | 3 | 7.4 | 120.7 |
| 10 | 45 | 1700 | 55 | 1.3 | 128.7 |
| 12 | 27 | 1100 | 56 | 1.6 | 117.5 |
| 14 | 35 | - | 78 | 1.8 | 115.7 |

As seen from table 2, that the amount of sulfuric acid added was determining, not only for the recovered quantity of purified oil, but also for the water content of the oil along with amount of sedimented material. Further, it can be seen that the acid wash only had a minor influence on the organic acid-related acid value, indicating that the fatty acids and the rosin acids not were affected by the acid wash.

### Esterification

Carboxylic acids, and especially fatty acids, of the evaporated purified enriched tall oil were to be esterified with methanol. Thus, the purified evaporated enriched tall oil was heated to 59 to 65°C. Subsequently, methanol comprising 1 wt% concentrated sulfuric acid was added to the heated evaporated enriched tall oil. Methanol was added in a weight ratio of 2:1, in relation to the molar weight of oleic acid, C 18:1, with the results of the acid and/or saponification number determinations as given values, and the resulting reaction mixture was heated to 59 to 65°C for 3 to 5 hours. Thereafter, the resulting mixture was washed with water and evaporated to obtain esterified enriched tall oil.

In table 3 below, representative parameters of the obtained esterified enriched tall oil are compared to the corresponding parameters for petroleum diesel and FAME

**Table 3**

| **Property** | **Petroleum diesel** | **FAME** | **Esterified enriched tall oil** |
|---|---|---|---|
| Flash point | > 65 °C | > 100°C | > 100°C |
| Density kg/m³ | 810-950 | 800-900 | 940-950 |
| Fatty acid methyl esters % (w/w) | 0 | Min 96.5 | 40-60 |
| Neutrals¹wt.% | 100 | 0 | 40-60 |
| Distillation range (90 % ) | 180-370°C | 300-360°C | 310-410°C |
| Alkali metal content (K+ Na mg/kg) | Not regulated | Max 10 | Max 10 |
| Earth metal content (Ca + Mg mg/kg) | Not regulated | Max 10 | Max 10 |
| Calculated net heat value MJ/kg | 42-44 | 37-38 | 40-41 |

| | | | |
|---|---|---|---|
| ¹ e.g. hydrocarbons and free alcohols | | | |

As seen from table 3, the net heat value of the esterified enriched tall oil is significantly higher than the one of FAME. Further, other relevant parameters are similar. Hence, esterified enriched tall oil is deemed to be a suitable additive to petroleum diesel having a higher net heat value than FAME

A blend of 31wt% esterified enriched tall oil and 69 wt% petroleum diesel, comprising 5 wt% FAME, gave a diesel like fuel having cetane number of 50 according to EN ISO 5165, a viscosity of 3.5 cSt, according to ASTM D 445, and a flash point of 63.5°C, according to EN ISO 3679, thus confirming that the esterified enriched tall oil is suitable as diesel like fuel additive to petroleum diesel.

## Claims

1. An enrichment method for obtaining components for the production of a diesel like fuel additive from crude tall oil comprising the steps of:
- providing crude tall oil;
- extracting lipophilic components being present in said crude tall oil with an organic solvent to obtain an organic extract, comprising said lipophilic components;
- washing the obtained organic extract with sulfuric acid to obtain an acid washed organic extract; and
- washing the acid washed organic extract with water, to obtain tall oil enriched in components for obtaining a diesel like fuel additive.

2. The method according to claim 1, wherein said organic solvent is a C5-C10 linear or branched hydrocarbon, such as n-hexane, cyclohexane, or n-heptane.

3. The method according to any one of the preceding claims, wherein the step of extracting said lipophilic components, comprises 1 to 3 extractions with said organic solvent, wherein the obtained organic extracts are combined into a single organic extract, comprising extracted lipophilic components.

4. The method according to any one of the preceding claims, wherein the weight ratio of crude tall oil:organic solvent in said extraction, or in each of said extractions, is 2:1 to 1:2.

5. The method according to any one of the preceding claims, wherein water, in addition to said organic solvent, is added to the crude tall oil in the extraction step.

6. The method according to any one of the preceding claims, wherein said sulfuric acid comprises at least 90 wt.% H₂SO₄, such as at least 95 wt.% H₂SO₄.

7. The method according to any one of the preceding claims, wherein said organic extract is cooled to between 0°C and 10°C, such as to between 2°C and 5°C, and optionally filtered, before being washed with sulfuric acid.

8. The method according to any one of the preceding claims, wherein the washing step with water is repeated until the pH of the washing water is 3 or above, such as 3.5 to 4.5.

9. The method according to any one of the preceding claims, wherein said method further comprises the step of evaporating at least part of the organic solvent being present in said tall oil enriched in components for obtaining a diesel like fuel additive; and wherein the temperature of the tall oil optionally does not exceed 80°C in any step of the method.

10. The method according to any one of the preceding claims, wherein said method further comprises the step of cooling said tall oil enriched in components for obtaining a diesel like fuel additive to cause precipitation of resin acids and the subsequent removal of precipitated resin acids.

11. A method for obtaining a diesel like fuel additive from crude tall oil, comprising the steps of:
- obtaining tall oil enriched in components for obtaining a diesel like fuel additive according to any one of the claims 1 to 10;
- esterifying carboxylic acids being present in said tall oil enriched in components for obtaining a diesel like fuel additive with a C1-3 alkanol, such as methanol, to obtain a diesel like fuel additive;
- optionally washing the diesel like fuel additive with water; and
- optionally evaporating at least part of the C1-3 alkanol present in said diesel like fuel additive.

12. The method according to claim 12, wherein the esterified tall oil enriched in components for obtaining a diesel like fuel additive is obtained without exposing the tall oil to a temperature above 80°C in any step.

13. A diesel like fuel additive obtainable by a process according to any one of the claims 11 and 12.

14. The diesel like fuel additive according to claim 13, wherein said fuel has at least one of the following properties:
- an iodine number according to SS-EN 14111 of at least 170;
- comprise between 40 wt% and 60 wt% of components other that fatty acids, methyl esters of fatty acids, rosin acids and methyl esters of rosin acids ;
- an acid number according to SS-EN 14104 of not more than 100, such as not more than 80; and
- a heat value of at least 39 MJ/kg;
- a density in the range of 930 to 960 kg/m³ at 15°C.

## Patentansprüche

1. Anreicherungsverfahren zum Erhalt von Komponenten für die Herstellung eines dieselartigen Kraftstoffadditivs aus rohem Tallöl, das folgende Schritte umfasst:
- Bereitstellen von rohem Tallöl;
- Extrahieren von in dem rohen Tallöl vorhandenen lipophilen Komponenten mit einem organischen Lösungsmittel zum Erhalt eines die lipophilen Komponenten umfassenden organischen Extrakts;
- Waschen des erhaltenen organischen Extrakts mit Schwefelsäure zum Erhalt eines säuregewaschenen organischen Extrakts; und
- Waschen des säuregewaschenen organischen Extrakts mit Wasser zum Erhalt von mit Komponenten zum Erhalt eines dieselartigen Kraftstoffadditivs angereichertem Tallöl.

2. Verfahren nach Anspruch 1, wobei das organische Lösungsmittel ein linearer oder verzweigter C₅-C₁₀-Kohlenwasserstoff, wie z. B. n-Hexan, Cyclohexan oder n-Heptan, ist.

3. Verfahren nach einem der vorangehenden Ansprüche, wobei der Schritt des Extrahierens der lipophilen Komponenten 1 bis 3 Extraktionen mit dem organischen Lösungsmittel umfasst, wobei die erhaltenen organischen Extrakte zu einem einzigen, extrahierte lipophile Komponenten umfassenden organischen Extrakt kombiniert werden.

4. Verfahren nach einem der vorangehenden Ansprüche, wobei das Gewichtsverhältnis von rohem Tallöl zu organischem Lösungsmittel bei der Extraktion bzw. bei jeder der Extraktionen 2:1 bis 1:2 beträgt.

5. Verfahren nach einem der vorangehenden Ansprüche, wobei dem rohen Tallöl bei dem Extraktionsschritt zusätzlich zu dem organischen Lösungsmittel Wasser zugegeben wird.

6. Verfahren nach einem der vorangehenden Ansprüche, wobei die Schwefelsäure wenigstens 90 Gew.-% H₂SO₄, wie z. B. wenigstens 95 Gew.-% H₂SO₄, umfasst.

7. Verfahren nach einem der vorangehenden Ansprüche, wobei der organische Extrakt vor dem Waschen mit Schwefelsäure auf zwischen 0°C und 10°C, wie z. B. auf zwischen 2°C und 5°C, gekühlt und optional gefiltert wird.

8. Verfahren nach einem der vorangehenden Ansprüche, wobei der Schritt des Waschens mit Wasser wiederholt wird, bis der pH-Wert des Waschwassers 3 oder mehr, wie z. B. 3,5 bis 4,5, beträgt.

9. Verfahren nach einem der vorangehenden Ansprüche, wobei das Verfahren weiterhin den Schritt des wenigstens teilweisen Verdampfens des in dem mit Komponenten zum Erhalt eines dieselartigen Kraftstoffadditivs angereicherten Tallöl vorhandenen organischen Lösungsmittels umfasst; und wobei die Temperatur des Tallöls optional in keinem Verfahrensschritt 80°C überschreitet.

10. Verfahren nach einem der vorangehenden Ansprüche, wobei das Verfahren weiterhin den Schritt des Kühlens des mit Komponenten zum Erhalt eines dieselartigen Kraftstoffadditivs angereicherten Tallöls umfasst, um die Abscheidung von Harzsäuren und die anschließende Entfernung abgeschiedener Harzsäuren zu bewirken.

11. Verfahren zum Erhalt eines dieselartigen Kraftstoffadditivs aus rohem Tallöl, das folgende Schritte umfasst:
- Gewinnen von mit Komponenten zum Erhalt eines dieselartigen Kraftstoffadditivs angereichertem Tallöl nach einem der Ansprüche 1 bis 10;
- Verestern von in dem mit Komponenten zum Erhalt eines dieselartigen Kraftstoffadditivs angereicherten Tallöl vorhandenen Carbonsäuren mit einem C₁₋₃-Alkanol, wie z. B. Methanol, zum Erhalt eines dieselartigen Kraftstoffadditivs;
- optional Waschen des dieselartigen Kraftstoffadditivs mit Wasser; und
- optional wenigstens teilweises Verdampfen des in dem dieselartigen Kraftstoffadditiv vorhandenen C₁₋₃-Alkanols.

12. Verfahren nach Anspruch 12, wobei das Tallöl im Zuge der Gewinnung des mit Komponenten zum Erhalt eines dieselartigen Kraftstoffadditivs angereicherten veresterten Tallöls in keinem Schritt einer Temperatur über 80°C ausgesetzt wird.

13. Dieselartiges Kraftstoffadditiv, das durch ein Verfahren nach einem der Ansprüche 11 und 12 erhältlich ist.

14. Dieselartiges Kraftstoffadditiv nach Anspruch 13, wobei der Kraftstoff wenigstens eine der folgenden Eigenschaften aufweist:
- eine Iodzahl gemäß SS-EN 14111 von wenigstens 170;
- einen Gehalt von zwischen 40 Gew.-% und 60 Gew.-% an Komponenten, bei denen es sich nicht um Fettsäuren, Methylester von Fettsäuren, Harzsäuren und Methylester von Harzsäuren handelt;
- eine Säurezahl gemäß SS-EN 14104 von höchstens 100, wie z. B. höchstens 80; und
- einen Heizwert von wenigstens 39 MJ/kg;
- eine Dichte im Bereich von 930 bis 960 kg/m³ bei 15°C.

## Revendications

1. Procédé d'enrichissement pour l'obtention de composants pour la production d'un additif pour carburant analogue au diesel à partir de tallöl brut, comprenant les étapes de :
- fourniture de tallöl brut ;
- extraction des composants lipophiles qui sont présents dans ledit tallöl brut avec un solvant organique pour obtenir un extrait organique, comprenant lesdits composants lipophiles ;
- lavage de l'extrait organique obtenu avec de l'acide sulfurique pour obtenir un extrait organique lavé à l'acide ; et
- lavage de l'extrait organique lavé à l'acide avec de l'eau, pour obtenir un tallöl enrichi en composants pour l'obtention d'un additif de carburant analogue au diesel.

2. Procédé selon la revendication 1, dans lequel ledit solvant organique est un hydrocarbure linéaire ou ramifié en C5-C10, tel que le n-hexane, le cyclohexane, ou le n-heptane.

3. Procédé selon l'une quelconque des revendications précédentes, dans lequel l'étape d'extraction desdits composants lipophiles, comprend 1 à 3 extractions avec ledit solvant organique, dans lequel les extraits organiques obtenus sont combinés en un unique extrait organique, comprenant les composants lipophiles extraits.

4. Procédé selon l'une quelconque des revendications précédentes, dans lequel le rapport pondéral du tallöl brut:solvant organique dans ladite extraction, ou dans chacune desdites extractions, est de 2:1 à 1:2.

5. Procédé selon l'une quelconque des revendications précédentes, dans lequel l'eau, en plus dudit solvant organique, est ajoutée au tallöl brut à l'étape d'extraction.

6. Procédé selon l'une quelconque des revendications précédentes, dans lequel ledit acide sulfurique comprend au moins 90 % en poids d'H₂SO₄, tel qu' au moins 95 % en poids d'H₂SO₄.

7. Procédé selon l'une quelconque des revendications précédentes, dans lequel ledit extrait organique est refroidi entre 0°C et 10°C, tel que entre 2°C et 5°C, et éventuellement filtré, avant d'être lavé avec de l'acide sulfurique.

8. Procédé selon l'une quelconque des revendications précédentes, dans lequel l'étape de lavage avec l'eau est répétée jusqu'à ce que le pH de l'eau de lavage soit de 3 ou plus, tel que 3,5 à 4,5.

9. Procédé selon l'une quelconque des revendications précédentes, dans lequel ledit procédé comprend en outre l'étape d'évaporation d'au moins une partie du solvant organique qui est présent dans ledit tallöl enrichi en composants pour l'obtention d'un additif pour carburant analogue au diesel ; et dans lequel éventuellement la température du tallöl ne dépasse pas 80°C dans une quelconque étape du procédé.

10. Procédé selon l'une quelconque des revendications précédentes, dans lequel ledit procédé comprend en outre l'étape de refroidissement dudit tallöl enrichi en composants pour l'obtention d'un additif de carburant analogue au diesel pour provoquer la précipitation des acides résiniques et l'élimination subséquente des acides de résine précipités.

11. Procédé d'obtention d'un additif de carburant analogue au diesel à partir de tallöl brut, comprenant les étapes de :
- obtention de tallöl enrichi en composants pour l'obtention d'un additif de carburant analogue au diesel selon l'une quelconque des revendications 1 à 10 ;
- estérification des acides carboxyliques qui sont présents dans ledit tallöl enrichi en composants pour l'obtention d'un additif de carburant analogue au diesel avec un alcanol en C1-3, tel que le méthanol, pour obtenir un additif de carburant analogue au diesel ;
- éventuellement lavage de l'additif de carburant analogue au diesel avec de l'eau ; et
- éventuellement évaporation d'au moins une partie de l'alcanol en C1-3 présent dans ledit additif de carburant analogue au diesel.

12. Procédé selon la revendication 12, dans lequel le tallöl estérifié enrichi en composants pour l'obtention d'un additif de carburant analogue au diesel est obtenu sans exposer le tallöl à une température supérieure à 80°C à une quelconque étape.

13. Additif de carburant analogue au diesel pouvant être obtenu par un procédé selon l'une quelconque des revendications 11 et 12.

14. Additif de carburant analogue au diesel selon la revendication 13, dans lequel ledit carburant possède au moins l'une des propriétés suivantes :
- un indice d'iode selon la norme SS-EN 14111 d'au moins 170 ;
- comprendre entre 40 % en poids et 60 % en poids de composants autres que des acides gras, des esters méthyliques d'acides gras, des acides de colophane et des esters méthyliques d'acides de colophane ;
- un indice d'acide selon la norme SS-EN 14104 de pas plus de 100, tel que pas plus de 80 ; et
- une valeur calorifique d'au moins 39 MJ/kg ;
- une densité dans la gamme de 930 à 960 kg/m³ à 15°C.
